(19) Europäisches Patentamt
European Patent Office
Office européen des brevets

(11) EP 2 840 100 B1

(12) FASCICULE DE BREVET EUROPEEN

(45) Date de publication et mention de la délivrance du brevet:
**07.08.2019 Bulletin 2019/32**

(51) Int Cl.:
***C08F 271/00*** *(2006.01)* ***C08L 39/00*** *(2006.01)*
***D21H 21/10*** *(2006.01)*

(21) Numéro de dépôt: **14181277.6**

(22) Date de dépôt: **18.08.2014**

# (54) NOUVEAUX COMPLEXES DE POLYMERES HYDROSOLUBLES ET LEURS UTILISATIONS

NEUE POLYMEISCHE WASSERLÖSLICHE cOMPLEXE UND DEREN VERWENDUNG

NOVEL POLYMERIC HYDROSULUBLE COMPLEXES AND THER USE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.08.2013 FR 1358119**

(43) Date de publication de la demande:
**25.02.2015 Bulletin 2015/09**

(73) Titulaire: **S.P.C.M. SA**
**42160 Andrézieux Bouthéon (FR)**

(72) Inventeurs:
- **Hund, René**
**42390 VILLARS (FR)**
- **Faucher, Gatien**
**42000 SAINT ETIENNE (FR)**
- **Fougerousse, Damien**
**42290 SORBIERS (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-02/084070 WO-A1-2006/071961**
**US-B2- 7 001 953**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 2 840 100 B1

## Description

### DOMAINE DE L'INVENTION

La présente invention concerne un complexe de polymères hydrosolubles issu de la polymérisation d'un ou plusieurs monomères hydrosolubles.

Un autre aspect de l'invention concerne l'utilisation de ce complexe en tant qu'agent de traitement de charges minérales et notamment pour leur mise en oeuvre dans la fabrication du papier, du carton ou analogue.

### ETAT ANTERIEUR DE LA TECHNIQUE

Dans le domaine de la fabrication du papier, des fibres cellulosiques sont mises en suspension aqueuse avant d'être déposées sur une toile de manière à former la feuille de papier qui est ensuite égouttée et séchée. Des charges minérales sont également ajoutées à cette suspension de fibres cellulosiques dans le but d'améliorer les propriétés optiques du papier notamment. La rétention de ces charges est généralement augmentée par addition d'un ou plusieurs agents polymériques.

Nous pouvons citer à titre d'exemple le système Optifill (Ashland) utilisant un système comportant un polymère amphotèrique (DADMAC/acide acrylique), le système Luredur (BASF) utilisant un seul polymère amphotèrique comprenant des fonctions vinylamine.

Il existe aussi des techniques d'ajout séquentiel de plusieurs polymères en des points différents. Il s'agit par exemple du système Fillertek (Nalco) qui comprend un système de deux flocculants ajoutés séparément.

Ces techniques comportent toutefois des inconvénients logistiques dus aux dosages différents des polymères et à leurs ajouts séparés.

D'autres polymères peuvent également être introduits dans la suspension cellulosique afin d'améliorer les propriétés de la feuille de papier. Cependant, l'introduction de polymères de poids moléculaires différents peut s'avérer problématique.

En effet, il est connu de l'homme de l'art les difficultés liées à la préparation d'une composition homogène contenant deux polymères ayant des poids moléculaires distincts.

En raison de cette différence de poids moléculaire, un déphasage peut apparaître lors de la mise en solution de ces polymères.

L'homme de l'art a donc mis au point des méthodes de polymérisation permettant ainsi de pallier au problème de déphasage.

Par exemple, les brevets US 7001953 et US 8021516 décrivent des polymères hydrosolubles pouvant être utilisés dans le traitement des boues et dans la fabrication du papier. Ces polymères sont obtenus par polymérisation de monomères en présence d'un polymère qui a été préparé préalablement et de manière indépendante. Comme indiqué dans ces documents, le polymère déjà synthétisé et le polymère en cours de synthèse, ne se greffent substantiellement pas.

Il s'agit en fait de la formation d'un polymère intercalé en présence d'un polymère hôte. Le polymère hôte n'est pas greffé lors de la polymérisation des monomères qui peut être mise en oeuvre en présence d'agent ramifiant. Ce procédé permet donc d'obtenir un mélange de deux polymères distincts et intercalés. Cette structure de polymères intercalés permet d'obtenir des propriétés distinctes de celles résultant d'un mélange de polymères non intercalés.

L'un des problèmes que se propose de résoudre la Demanderesse est de mettre au point un nouveau complexe de polymères hydrosolubles qui ne présentent pas de déphasage, c'est-à-dire un mélange homogène de polymères interconnectés.

Un autre aspect de l'invention concerne un nouvel agent de traitement des charges minérales mises en oeuvre dans la fabrication du papier, du carton ou analogues.

En effet, les papetiers cherchent à augmenter la quantité de charges afin d'améliorer les propriétés optiques de la feuille telle que l'opacité ou la blancheur. Or, les produits de l'art antérieur ne sont pas totalement satisfaisants.

### EXPOSE DE L'INVENTION

La présente invention concerne un complexe de polymères comprenant un polymère hydrosoluble (polymère hôte) et un ou plusieurs monomères hydrosolubles polymérisés en présence dudit polymère hôte hydrosoluble.

Plus précisément, l'objet de la présente invention concerne un complexe de polymères obtenu par polymérisation de monomères hydrosolubles en présence d'au moins un polymère hôte hydrosoluble comprenant des fonctions vinylamine et d'au moins un agent de transfert non polymérique et en l'absence d'agent ramifiant ou réticulant de type polyfonctionnel éthylénique.

Dans le complexe ainsi obtenu, le(s) polymère(s) résultant de la polymérisation des monomères se ramifie

avec le polymère hôte. Contrairement aux polymères décrits dans US 7001953, il ne s'agit pas d'un mélange de polymères mais d'un complexe dans lequel le polymère hôte joue le rôle de réticulant ou ramifiant, lors de la polymérisation des monomères.

L'agent de transfert permet notamment de limiter la réticulation liée au polymère hôte et de contrôler la longueur des chaînes polymériques formées pendant la polymérisation des monomères hydrosolubles. Au contraire, le mélange de polymères décrits dans US 7001953 est obtenu en l'absence d'agent de transfert. La différence entre le complexe de polymères selon la présente invention et un mélange de complexes obtenu en l'absence d'agent de transfert conformément à US 7001953 est exemplifiée ci-après.

Par polymère, on entend un homopolymère ou un copolymère issu de la polymérisation de monomères respectivement identiques ou distincts.

Un autre aspect de l'invention est l'utilisation de ce complexe de polymères hydrosolubles en tant qu'agent de traitement de charges minérales destinées à la fabrication de papiers, de cartons ou d'analogues.

<u>Polymère hôte</u>

Le polymère hôte comprend préférentiellement des fonctions vinylamine, c'est-à-dire de type polyvinylamine.

Le polymère hôte comprenant des fonctions vinylamine peut être issu de différents procédés connus de l'homme de l'art. Il peut notamment s'agir:

- d'un polymère issu de la dégradation d'Hofmann sur un «polymère base», ou
- d'un polymère issu de l'hydrolyse totale ou partielle d'un homopolymère ou d'un copolymère de N vinylformamide.

<u>*Les polyvinylamines issus de la dégradation d'Hofmann*</u>

La dégradation d'Hofmann est une réaction découverte par Hofmann à la fin du dix-neuvième siècle, qui permet de convertir un amide (voire un acrylonitrile) en amine primaire par élimination de dioxyde de carbone. Le mécanisme réactionnel est détaillé ci-dessous.

En présence d'une base (soude), un proton est arraché à l'amide.

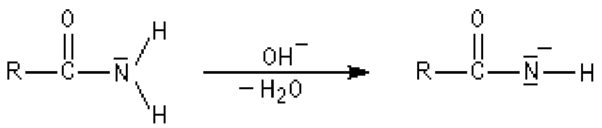


L'ion amidate formé réagit alors avec le chlore actif ($Cl_2$) de l'hypochlorite (e.g. : NaClO qui est en équilibre : $2\ NaOH + Cl_2 \Leftrightarrow NaClO + NaCl + H_2O$) pour donner un N-chloramide. La base (NaOH) arrache un proton du chloramide pour former un anion. L'anion perd un ion chlorure pour former un nitrène qui subit une transposition en isocyanate.

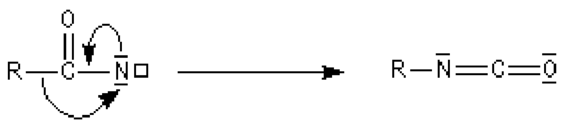

Par réaction entre l'ion hydroxyde et l'isocyanate, un carbamate est formé.

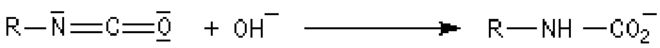

Après décarboxylation (élimination de $CO_2$) à partir du carbamate, on obtient une amine primaire :

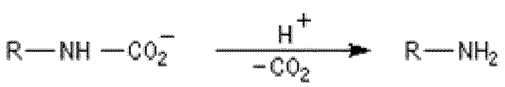


Pour la conversion de tout ou partie des fonctions amide d'un polymère en fonctions amine, deux facteurs principaux interviennent (exprimés en rapports molaires). Il s'agit de :

- Alpha = (hypohalogénure d'alcalin et/ou alcalino terreux / amide),

- Beta = (hydroxyde d'alcalin et/ou alcalino terreux / hypohalogénure d'alcalin et/ou alcalino terreux).

Selon un mode préférentiel, le polymère comprenant des fonctions vinylamine est issu de la dégradation d'Hofmann effectuée sur un «polymère base» comprenant un monomère non ionique choisi dans le groupe comprenant l'acrylamide ou un de ses dérivés.
Parmi les dérivés d'acrylamide, on peut citer le N-isopropylacrylamide, le N,N-diméthylacrylamide ou encore le méthylacrylamide. Le monomère préféré est l'acrylamide.
Selon l'invention, la proportion en monomère acrylamide ou dérivés dans le «polymère base» est comprise entre 30 %mol et 100 %mol, de préférence entre 50 %mol et 95 %mol, et encore plus préférentiellement entre 60 %mol et 90 %mol, par rapport au nombre total de monomères dans le «polymère base».
Le «polymère base» peut également contenir en outre des monomères cationiques et/ou anioniques.
Le ou les monomères cationiques pouvant être utilisés dans le cadre de l'invention peuvent être choisis, notamment parmi les sels d'ammonium quaternaire des monomères du type acrylamide, acrylique, vinylique, allylique ou maléique. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de methacrylamido propyltrimethyl ammonium (MAPTAC). Un monomère cationique préféré est le DADMAC.
Selon l'invention, la proportion en monomère cationique dans le «polymère base» est comprise entre 0 %mol et 99 %mol, de préférence entre 5 %mol et 50 %mol, et encore plus préférentiellement entre 10 %mol et 40 %mol, par rapport au nombre total de monomères dans le «polymère base».
Le ou les monomères anioniques pouvant être utilisés dans le cadre de l'invention peuvent être choisis dans un large groupe. Ces monomères peuvent présenter des fonctionnalités acryliques, vinyliques, maléiques, fumariques, allyliques et contenir un groupe carboxylate, phosphonate, phosphate, sulfate, sulfonate, ou un autre groupe à charge anionique. Le monomère peut être acide ou bien sous forme de sel ou de métal alcalino terreux, de métal alcalin ou d'ammonium correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique, et les sels de ces monomères solubles dans l'eau d'un métal alcalin, d'un métal alcalino terreux, et d'ammonium. Un monomère préféré est l'acide acrylique.
Selon l'invention la proportion en monomère anionique dans le «polymère base» est comprise entre 0 %mol et 99 %mol, de préférence entre 2 %mol et 50 %mol, et encore plus préférentiellement entre 5 %mol et 30 %mol, par rapport au nombre total de monomères dans le «polymère base».
Selon l'invention, le facteur alpha du polymère hôte est avantageusement compris entre 0,1 et 1, de préférence entre 0,3 et 0,9, et encore plus préférentiellement entre 0,5 et 0,8.
Selon un autre mode de l'invention, il est possible d'utiliser des polyvinylamines obtenues par dégradation d'Hofmann effectuée sur un polymère comprenant de l'acrylamide ou ses dérivés, et au moins un composé polyfonctionnel contenant au moins 3 hétéroatomes parmi N, O, S, P présentant chacun au moins un hydrogène mobile. L'incorporation du composé polyfonctionnel est effectuée avant ou pendant la polymérisation des monomères constitutifs du «polymère base».
De manière préférentielle, le composé polyfonctionnel est choisi dans le groupe comprenant la polyéthylèneimine, la polyamine, et la polyallylamine.

*Les polvvinvlamines issus de l'hydrolyse totale ou partielle d'un polymère de N-vinylformamide*

Dans une première étape, un polymère de N-vinylformamide (NVF) est obtenu, la NVF présentant le motif suivant:

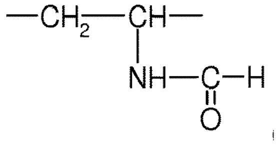

Par la suite, ce motif NVF est ensuite converti, par hydrolyse, en vinylamine :

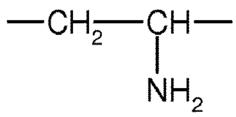

L'hydrolyse peut être menée par action d'acide (hydrolyse acide) ou de base (hydrolyse basique).

En fonction de la quantité d'acide ou de base ajoutée, le polymère de NVF est partiellement ou totalement converti en vinylamine.

De manière avantageuse, le degré d'hydrolyse est compris entre 1 et 100%, plus avantageusement encore entre 30 et 90%. En d'autres termes, 30 à 90 groupements NVF sont convertis en groupements amine pour 100 groupements NVF de départ.

Préférentiellement le polymère de N-vinylformamide (NVF) comprend au moins un monomère non ionique et/ou au moins un monomère cationique et/ou au moins un monomère anionique. Les monomères pouvant être utilisés dans le cadre de l'invention peuvent être choisis parmi les listes ci-dessus mentionnées.

Outre le monomère vinylamine, selon un mode de réalisation préférentiel, le polymère hôte comprend au moins un monomère non ionique et au moins un monomère cationique. Préférentiellement le polymère comprend de l'acrylamide et du DADMAC.

Selon une caractéristique préférée de l'invention, le polymère hôte peut être ramifié.

La ramification est réalisée de préférence durant (ou éventuellement après) la polymérisation des monomères constituant le polymère hôte, en présence d'un agent ramifiant polyfonctionnel et éventuellement d'un agent de transfert.

On trouvera ci-dessous une liste non limitative d'agents ramifiant : méthylène bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol di glycidyléther, ou des époxy.

En pratique, l'agent de ramification est introduit avantageusement à raison de cinq à cinquante milles (5 à 50000) parties par million en poids par rapport à la matière active (poids des monomères constituant le polymère hôte), de préférence 5 à 10000 ppm, avantageusement de 5 à 5000 ppm. Avantageusement, l'agent de ramification est le méthylène bis acrylamide (MBA).

Des agents de transfert permettant de limiter la longueur des chaînes polymériques peuvent également être présents lors de la polymérisation des monomères constituant le polymère hôte. On trouvera ci-dessous une liste non limitative des agents de transfert: alcool isopropylique, hypophosphite de sodium, mercaptoethanol.

Selon l'invention le polymère hôte a un poids moléculaire d'au moins 10000 g/mol, de préférence d'au moins 50000 g/mol, et encore plus préférentiellement d'au moins 100000 g/mol.

<u>Le complexe de polymères hydrosolubles</u>

Il est issu de la polymérisation de monomères hydrosolubles au cours de laquelle le polymère hôte préexistant joue le rôle d'agent réticulant ou ramifiant.

Le ou les monomères hydrosolubles mis en oeuvre lors de la préparation du complexe de polymères hydrosolubles peuvent notamment être un monomère non ionique et/ou au moins un monomère anionique et/ou au moins un monomère cationique.

Comme déjà indiqué, cette polymérisation est mise en oeuvre en présence d'au moins un agent de transfert non polymérique dont le poids moléculaire est avantageusement inférieur à 200 g/mol. En outre, la polymérisation des monomères est également réalisée en l'absence d'agent ramifiant ou réticulant de type polyfonctionnel éthylénique.

Par « agent ramifiant ou réticulant de type polyfonctionnel éthylénique », on désigne les agents comportant un groupement polyvinylique ou polyallylique bifonctionnalisé, trifonctionnalisé ou tetrafonctionnalisé.

Au moins un agent de transfert non polymérique mis en oeuvre lors de la polymérisation du ou des monomères hydrosolubles est avantageusement choisi dans le groupe comprenant l'alcool isopropylique, l'hypophosphite de sodium, et le mercaptoethanol.

La quantité d'agent de transfert introduite est avantageusement comprise entre 1 et 15000 ppm, préférentiellement entre 10 et 10000 ppm, plus préférentiellement entre 100 et 5000 ppm en poids par rapport au poids des monomères hydrosolubles mis en oeuvre.

Les différents monomères mis en oeuvre peuvent être choisis parmi les listes respectives citées précédemment dans la description du polymère hôte.

Selon l'invention, la proportion en monomères hydrosolubles mis en oeuvre est avantageusement la suivante, par rapport au nombre total de monomères hydrosolubles mis en oeuvre :

- 1 à 99 mol% de monomère non ionique, de préférence entre 40 %mol et 99 %mol, et encore plus préférentiellement

entre 60 %mol et 98 % mol ; et/ou

- 0 à 99 mol% de monomère anionique, de préférence entre 1 %mol et 40 %mol, et encore plus préférentiellement entre 1 %mol et 20 % mol ; et/ou
- 0 à 99 mol% de monomère cationique, de préférence entre 1 %mol et 40 %mol, et encore plus préférentiellement entre 1 %mol et 20 % mol ;

le nombre total de monomères hydrosolubles représentant 100%.

Selon un mode préférentiel, au moins un monomère non ionique et au moins un monomère anionique sont mis en oeuvre. Il s'agit préférentiellement de l'acrylamide et de l'acide acrylique.

Les complexes de la présente invention se différencient notamment de l'art antérieur du fait de la présence d'au moins un agent de transfert non polymérique lors de la polymérisation des monomères hydrosolubles en présence du polymère hôte. En effet, la présence de l'agent de transfert permet de limiter la réticulation du polymère résultant de la polymérisation des monomères hydrosolubles avec le polymère hôte tout en contrôlant le poids moléculaire des chaînes polymériques formées.

Le ratio massique entre le polymère hôte et les monomères est avantageusement compris entre 0,01 et 4, de préférence entre 0,05 et 1, et encore plus préférentiellement entre 0,1 et 0,5.

De manière générale, la préparation du complexe de polymères de l'invention ne nécessite pas de développement de procédé de polymérisation particulier. En effet, ce complexe peut être obtenu selon toutes les techniques de polymérisation bien connues par l'homme de métier. Il peut notamment s'agir de polymérisation en solution ; polymérisation en gel ; polymérisation par précipitation ; polymérisation en émulsion (aqueuse ou inverse) ; polymérisation en suspension ; ou de polymérisation micellaire. Le procédé de préparation du complexe de polymères peut comprendre les étapes suivantes :

- préparation d'un mélange comprenant au moins un polymère hôte, des monomères hydrosolubles, et au moins un agent de transfert non polymérique;
- obtention du complexe de polymères par polymérisation des monomères hydrosolubles.

Le procédé de préparation du complexe de polymères peut comprendre les étapes suivantes :

- préparation d'un mélange comprenant au moins un polymère hôte, et au moins un agent de transfert non polymérique;
- des monomères hydrosolubles sont ajoutés en coulée continue dans le mélange ;
- obtention du complexe de polymères par polymérisation des monomères hydrosolubles.

Le procédé de préparation du complexe de polymères peut comprendre les étapes suivantes :

- préparation d'un mélange comprenant au moins un polymère hôte,
- des monomères hydrosolubles, et au moins un agent de transfert non polymérique sont ajoutés en coulée continue dans le mélange ;
- obtention du complexe de polymères par polymérisation des monomères hydrosolubles.

Le procédé de préparation du complexe de polymères peut comprendre les étapes suivantes :

- au moins un polymère hôte, des monomères hydrosolubles, et au moins un agent de transfert non polymérique sont ajoutés en coulée continue dans le réacteur;
- obtention du complexe de polymères par polymérisation des monomères hydrosolubles.

Le complexe de polymères hydrosolubles peut se trouver sous forme poudre, liquide ou émulsion. Préférentiellement le complexe est sous forme de solution.

Préférentiellement, lors de la préparation du complexe, le polymère hôte est introduit dans le réacteur avec les monomères et l'agent de transfert de chaîne non polymérique. La polymérisation est ensuite initiée par ajout des catalyseurs.

Un autre aspect de l'invention est l'utilisation des complexes de polymères hydrosolubles en tant qu'agent de traitement de charges minérales destinées à la fabrication de papiers, de cartons ou d'analogues.

Il a été trouvé de manière surprenante que l'utilisation des complexes de l'invention en tant qu'agent de traitement de charges minérales permettait d'améliorer grandement la rétention des charges lors de la fabrication de papiers, de cartons ou analogues.

Sans vouloir émettre une quelconque théorie, il semblerait que le greffage du polymère résultant de la polymérisation des monomères hydrosolubles sur le polymère hôte permet d'obtenir des produits ayant de meilleures performances comme agent de traitement de charges minérales.

La ou les charges minérales pouvant être traitées sont avantageusement choisies parmi le carbonate de calcium précipité (PCC), le carbonate de calcium naturel (GCC), le kaolin, le dioxyde de titane, la silice, le silicate ou le trihydrate d'aluminium. De préférence la charge minérale a traitée est le PCC.

L'addition du complexe est réalisée avec les moyens conventionnels connus de l'homme de l'art. Le complexe peut être directement mélangé avec le slurry de charges minérales. De préférence le complexe est introduit avant la pompe de mélange (fan pump). Plus préférentiellement, le complexe est ajouté dans la canalisation du slurry avant introduction dans la pâte à papier.

Le complexe peut être utilisé sous forme de solution aqueuse diluée ou non diluée.

La quantité de complexe ajouté est comprise entre 3 g de matière active/tonne de papier et 10000 g/T, préférentiellement entre 10 g/T et 3000g/T et encore plus préférentiellement entre 30 g/T et 1000 g/T.

En plus du complexe, d'autres composés connus de l'homme de métier peuvent être associés. On pourra citer de manière non limitative les dispersants, les biocides ou encore les agents antimousse.

Le procédé de fabrication de papier, carton ou analogues, selon l'invention peut comprendre les étapes suivantes, sur une machine à papier :

- mise en suspension aqueuse de fibres cellulosiques ;
- addition de charges minérales dans la suspension aqueuse de fibres cellulosiques, lesdites charges ayant été préalablement traitées avec le complexe ramifié de polymères objet de l'invention ;
- formation d'une feuille de papier, carton ou analogue sur la toile de la machine à papier ;
- séchage de la feuille.

Ce procédé peut également comprendre l'addition de polymères distincts du complexe selon l'invention. On pourra citer à titre d'exemple les coagulants, les agents de rétention, les flocculants ou encore l'amidon.

Les diverses étapes du procédé de fabrication de papier, carton ou analogues sont conformes aux techniques faisant partie des connaissances de l'homme du métier.

Les exemples ci-après illustrent l'invention sans toutefois la limiter.

## EXEMPLES DE REALISATION DE L'INVENTION

### Synthèse d'un complexe de polymères selon l'invention (exemple N)

Dans un réacteur de 1 litre équipé d'un agitateur mécanique, d'un thermomètre, d'un réfrigérant et d'une canne plongeante d'azote gazeux, on introduit 533g de polymère hôte (produit commercial HF31 (SNF floerger), matière active=10,5%, matière sèche=21%) nommé dans les exemples par X1. On ajoute 416g d'acrylamide 50% (solution à 50% en poids) et 17,6g d'acide acrylique 90% (solution à 90% en poids), ainsi que 0,58g d'agent de transfert de chaine (mercaptoéthanol). La température est ajustée à 20°C et les catalyseurs sont alors injectés dans le milieu réactionnel, soit 4,04g de persulfate de sodium et 0,026g de sel de Möhr. Grâce à l'exothermie de réaction, la température du milieu réactionnel augmente jusqu'à la température de 69,2°C.Après 45 minutes de vieillissement, 2,5g de bisulfite de sodium (solution à 40% en poids) sont additionnés pour faire réagir les éventuels monomères résiduels. Un nouveau vieillissement de 45 minutes est appliqué avant refroidissement.
La solution de complexe obtenue présente un pH de 2,7, un extrait sec de 35,2% et une viscosité de 9600 cps (produit N).

### Synthèse du polymère X2

Dans un réacteur de 1 litre, équipé d'un agitateur mécanique, d'un thermomètre, d'un réfrigérant et d'une canne plongeante d'azote gazeux, on introduit 557 g d'eau deionisée, 401 g d'acrylamide 50 % (solution à 50 % en poids) et 17 g d'acide acrylique 90 % (solution à 90 % en poids). La température est ajustée à 30 °C. On injecte ensuite rapidement 0,23 g de mercaptoéthanol, 3,1 g de persulfate de sodium et 0,02 g de sel de Mohr. Grâce à l'exothermie de réaction, la température du milieu réactionnel augmente jusqu'à la température de 95°C. Lorsque la viscosité du produit à chaud est supérieure à 5000 cps, on ajoute 2,5 g de bisulfite de sodium 40 % (solution à 40 % en poids) pour faire réagir les éventuels monomères résiduels. Après 45 minutes de vieillissement, le polymère est refroidi à 25-30°C puis est neutralisé par 15,3 g d'hydroxyde de sodium 50 % (solution à 50 % en poids).
On obtient par ce procédé un polymère anionique présentant un pH de 6,2, un extrait sec de 22,7% et une viscosité de 9400 cps.

Procédure de test d'évaluation de la rétention totale et de la rétention de charges :

Les différents résultats ont été obtenus grâce à l'utilisation d'un récipient de type « Britt Jar », avec une vitesse d'agitation de 1000 tours par minute.
La pâte utilisée consiste en un mélange de fibres constitué de :

- 70% en poids de fibres de kraft de feuillus blanchis,
- 10% en poids de fibres de kraft de résineux blanchis,
- 20% en poids de fibres de pâte mécanique à base de pin.

On ajoute ultérieurement au mélange de fibres des charges à raison de 30% de carbonate de calcium éventuellement prétraité avec le produit de l'invention. Le carbonate de calcium est préparé sous forme de slurry à 20% en poids (composition aqueuse).
La séquence d'ajout des différents composants est la suivante :

T=0s : Mise en agitation de 500ml de pâte,
T=10s : Addition du slurry de carbonate de calcium éventuellement prétraité,
T=20s : Ajout de l'agent de rétention principal,
T=30s : Récupération des 100ml d'eaux blanches.

La rétention première passe en pourcentage (%FPR : First Pass Retention), correspond à la rétention totale étant calculée selon la formule suivante :

$$\%FPR = (C_{HB}-C_{WW})/C_{HB}x100$$

La rétention première passe des cendres en pourcentage (%FPAR : First Pass Ash Retention), correspond à la rétention totale étant calculée selon la formule suivante :

$$\%FPR = (A_{HB}-A_{WW})/A_{HB}x100$$

Avec :

$C_{HB}$ : Consistance de la caisse de tête,
$C_{WW}$ : Consistance des eaux blanches,
$A_{HB}$ : Consistance des cendres de la caisse de tête,
$A_{WW}$ : Consistance des cendres des eaux blanches.

Les valeurs les plus élevées obtenues pour la %FPR et %FPAR correspondent aux meilleures performances.

| N° Essai | Produit | Dosage (g/t) | %FPAR |
|---|---|---|---|
| 0 | Blanc | 0 | 26,2 |
| 1 | X1 | 300 | 27,4 |
| 2 | X2 | 300 | 29,5 |
| 3 | Mélange X1/X2(20/80 poids sec) | 300 | 42,8 |
| 4 | N (INVENTION) | 300 | 45,6 |
| 5 | Mélange C1/X2(17,25/82,75 poids sec) | 300 | 42,3 |
| 6 | C2 | 300 | 39,5 |
| 7 | C3 | 300 | 40,4 |
| 8 | X3 | 300 | 39,8 |
| 9 | M | - | - |

(Les dosages exprimés sont en quantité de polymère sec par rapport à la pâte sèche)

X1 : Copolymère issu de la dégradation d'Hofmann d'un copolymère DADMAC/AM (30/70 % en mole) avec un facteur alpha=0,7 (Correspond au polymère hôte du produit N).
X2 : Copolymère AA/AM (7/93 % en mole)..
N : Polymère selon l'invention
C1 : Xelorex RS 1200 (ex Luredur VH) de BASF. Copolymère NVF/VA (50/50 % en mole).
C2 : Xelorex F3000 (ex V-Product 8358 X) de BASF. Copolymère NVF/VA/AA (35/35/30 % en mole).
C3 : M5305 de Ashland. Copolymère DADMAC/AA/AM (15/15/70 % en mole).
X3 : Polyamine/X2 (15/85 % en poids sec). (la polyamine étant ramifiée et de type Dimethylamine / Ethylenediamine / Epichlorhydrine).
M : polymère synthétisé comme le polymère N mais sans agent de transfert de chaine (mercaptoéthanol).
VA = vinylamine
DADMAC = chlorure de diméthyldiallylammonium
AM = acrylamide
AA = acide acrylique
NVF = N-vinylformamide

Dans tous les essais, On ajoute 200g/t de d'un copolymère acrylamide/ADAME MeCl (90/10) en tant qu'agent de rétention principal. (ADAME MeCl = acrylate de diméthylaminoéthyle quaternisé avec le chlorure de méthyle).
On constate dans les essais 1 et 2 du précédent tableau, que l'utilisation du polymère hôte ou secondaire seul n'apporte quasiment pas de performances en rétention de charges par rapport à l'essai de référence (blanc).
Les meilleures performances de rétention de charges sont obtenues dans l'essai 4, avec le produit N de l'invention, qui surclasse les produits C2 et C3 de l'art antérieur (essais 6 et 7).
Les mélanges X1/X2 et C1/X2 apportent des performances quasi-équivalentes en terme de rétention de charges (essais 3 et 5). Toutefois en test de vieillissement (température ambiante), nous observons un déphasage au bout d'un mois pour le mélange X1/X2 et au bout de 15 jours pour le mélange C1/X2.
Le produit X3 (Essai 8), correspond à un produit secondaire tel que décrit dans le document US 7001953. Il n'apporte pas le même niveau de performances de rétention de charges que le produit N selon l'invention (essai 4).
A l'issue de la synthèse du polymère M, un gel compact est obtenu. Du fait de sa consistance, le polymère M n'a pas pu être testé. Cela démontre clairement l'intérêt de l'agent de transfert pour obtenir le complexe de polymères selon l'invention. L'absence d'agent de transfert dans l'exemple M est conforme au procédé de synthèse du mélange de polymères selon le document US 7001953.

## Revendications

1. Complexe de polymères obtenu par polymérisation de monomères hydrosolubles : en présence d'un polymère hôte comprenant des fonctions vinylamine et d'un agent de transfert non polymérique, et en l'absence d'agent ramifiant ou réticulant de type polyfonctionnel éthylénique.

2. Complexe de polymères selon la revendication 1, ***caractérisé* en ce que** l'agent de transfert non polymérique est choisi dans le groupe comprenant l'alcool isopropylique, l'hypophosphite de sodium, et le mercaptoethanol.

3. Complexe de polymères selon la revendication 1, ***caractérisé* en ce que** le polymère hôte comprenant des fonctions vinylamine est issu de l'hydrolyse d'un homopolymère ou d'un copolymère de N vinylformamide.

4. Complexe de polymères selon la revendication 1, ***caractérisé* en ce que** le polymère hôte comprenant des fonctions vinylamine est issu de la réaction de dégradation d'Hofmann sur un «polymère base».

5. Complexe de polymères selon la revendication 4, ***caractérisé* en ce que** le «polymère base» comprend au moins un monomère non ionique choisi dans le groupe comprenant l'acrylamide et ses dérivés.

6. Complexe de polymères selon la revendication 4, ***caractérisé* en ce que** le «polymère base» comprend au moins un composé polyfonctionnel contenant au moins 3 hétéroatomes parmi N, O, S, P présentant chacun au moins un hydrogène mobile.

7. Complexe de polymères selon la revendication 6, ***caractérisé* en ce que** le composé polyfonctionnel est choisi

dans le groupe comprenant la polyéthylèneimine, la polyamine, et la polyallylamine.

**8.** Complexe de polymères selon l'une des revendications 1 à 7, ***caractérisé* en ce que** les monomères constitutifs du polymère hôte et les monomères hydrosolubles sont choisis dans le groupe comprenant :

- l'acrylamide ; le N-isopropylacrylamide ; le N,N-diméthylacrylamide ; la N-vinylformamide ;
- les sels d'ammonium quaternaires de l'acrylate de diméthylaminoéthyle (ADAME) ; les sels d'ammonium quaternaires du méthacrylate de diméthylaminoéthyle (MADAME) ; le chlorure de diméthyldiallylammonium (DADMAC) ; le chlorure d'acrylamido propyltriméthyl ammonium (APTAC) ; le chlorure de methacrylamido propyltrimethyl ammonium (MAPTAC) ;
- l'acide acrylique ; l'acide méthacrylique ; l'acide itaconique ; l'acide crotonique ; l'acide maléique ; l'acide fumarique ; l'acide 2-acrylamido 2-methylpropane sulfonique ; l'acide vinylsulfonique ; l'acide vinylphosphonique ; l'acide allylsulfonique ; l'acide allylphosphonique ; l'acide styrène sulfonique ; les sels hydrosolubles d'un métal alcalin, d'un métal alcalino terreux, ou d'ammonium de ces monomères.

**9.** Complexe de polymère selon l'une des revendications 1 à 8, **caractérisé en ce que** le ratio massique entre le polymère hôte et les monomères est avantageusement compris entre 0,01 et 4, de préférence entre 0,05 et 1, et encore plus préférentiellement entre 0,1 et 0,5.

**10.** Procédé de préparation du complexe de polymères objet de l'une des revendications 1 à 9, comprenant les étapes suivantes :

- préparation d'un mélange comprenant au moins un polymère hôte, des monomères hydrosolubles, et au moins un agent de transfert ;
- obtention du complexe de polymères par polymérisation des monomères hydrosolubles.

**11.** Procédé de fabrication de papier, carton ou analogues, comprenant les étapes suivantes :

- mise en suspension aqueuse de fibres cellulosiques ;
- addition de charges minérales dans la suspension aqueuse de fibres, lesdites charges ayant été préalablement mélangées avec le complexe de polymères objet de l'une des revendications 1 à 9 ;
- formation d'une feuille de papier, carton ou analogue sur la toile de la machine à papier ;
- séchage de la feuille.

## Patentansprüche

**1.** Polymerkomplex, erhalten durch Polymerisation wasserlöslicher Monomere: in Gegenwart eines Vinylaminfunktionen umfassenden Wirtspolymers und eines nicht polymeren Übertragungsmittels und in Abwesenheit eines polyfunktionellen ethylenischen Verzweigungs- oder Vernetzungsmittels.

**2.** Polymerkomplex nach Anspruch 1, ***dadurch gekennzeichnet, dass*** das nicht polymere Übertragungsmittel ausgewählt ist aus der Gruppe, bestehend aus Isopropylalkohol, Natriumhypophosphit und Mercaptoethanol.

**3.** Polymerkomplex nach Anspruch 1, ***dadurch gekennzeichnet, dass*** das Vinylaminfunktionen umfassende Wirtspolymer aus der Hydrolyse eines Homopolymers oder eines N-Vinylformamid-Copolymers stammt.

**4.** Polymerkomplex nach Anspruch 1, ***dadurch gekennzeichnet, dass*** das Vinylaminfunktionen umfassende Wirtspolymer aus der Hofmann-Abbaureaktion an einem "Basispolymer" stammt.

**5.** Polymerkomplex nach Anspruch 4, ***dadurch gekennzeichnet, dass*** das "Basispolymer" mindestens ein nicht ionisches Monomer umfasst, das ausgewählt ist aus der Gruppe, bestehend aus Acrylamid und dessen Derivaten.

**6.** Polymerkomplex nach Anspruch 4, ***dadurch gekennzeichnet, dass*** das "Basispolymer" mindestens eine polyfunktionelle Verbindung umfasst, die mindestens 3 Heteroatome, ausgewählt aus N, O, S, P, enthält, die jeweils mindestens einen mobilen Wasserstoff aufweisen.

**7.** Polymerkomplex nach Anspruch 6, ***dadurch gekennzeichnet, dass*** die polyfunktionelle Verbindung ausgewählt

ist aus der Gruppe, bestehend aus Polyethylenimin, Polyamin und Polyallylamin.

**8.** Polymerkomplex nach einem der Ansprüche 1 bis 7, ***dadurch gekennzeichnet, dass*** die Monomerbestandteile des Wirtspolymers und die wasserlöslichen Monomere ausgewählt sind aus der Gruppe, bestehend aus:

- Acrylamid; N-Isopropylacrylamid; N,N-Dimethylacrylamid; N-Vinylformamid;
- quaternären Ammoniumsalzen von Dimethylaminoethylacrylat (ADAME); quaternären Ammoniumsalzen von Dimethylaminoethylmethacrylat (MADAME); Dimethyldiallylammoniumchlorid (DADMAC); Acrylamidpropyltrimethylammoniumchlorid (APTAC); Methacrylamidpropyltrimethylammoniumchlorid (MAPTAC);
- Acrylsäure; Methacrylsäure; Itaconsäure; Crotonsäure; Maleinsäure; Fumarsäure; 2-Acrylamido-2-methylpropansulfonsäure; Vinylsulfonsäure; Vinylphosphonsäure; Allylsulfonsäure; Allylphosphonsäure; Styrolsulfonsäure; wasserlöslichen Salzen eines Alkalimetalls, eines Erdalkalimetalls oder wasserlöslichen Ammoniumsalzen dieser Monomere.

**9.** Polymerkomplex nach einem der Ansprüche 1 bis 8, ***dadurch gekennzeichnet, dass*** das Massenverhältnis zwischen dem Wirtspolymer und den Monomeren vorteilhaft zwischen 0,01 und 4, vorzugsweise zwischen 0,05 und 1 und noch mehr bevorzugt zwischen 0,1 und 0,5 liegt.

**10.** Verfahren zur Herstellung des Polymerkomplexes nach einem der Ansprüche 1 bis 9, umfassend die folgenden Schritte:

- Herstellung einer Mischung, die mindestens ein Wirtspolymer, wasserlösliche Monomere und mindestens ein Übertragungsmittel umfasst;
- Erhalten des Polymerkomplexes durch Polymerisation wasserlöslicher Monomere.

**11.** Verfahren zur Herstellung von Papier, Pappe oder dergleichen, umfassend folgende Schritte:

- Herstellen einer wässrigen Suspension von Cellulosefasern;
- Zugeben mineralischer Füllstoffe zu der wässrigen Fasersuspension, wobei die Füllstoffe zuvor mit dem Polymerkomplex nach einem der Ansprüche 1 bis 9 gemischt wurden;
- Bilden eines Blatts Papier, Pappe oder dergleichen auf dem Papiermaschinentuch;
- Trocknen des Blatts.

## Claims

**1.** Polymer complex obtained by polymerization of water-soluble monomers: in the presence of a host polymer comprising vinylamine functions and of a non-polymeric transfer agent, and in the absence of branching or crosslinking agent of ethylenic polyfunctional type.

**2.** Polymer complex according to Claim 1, ***characterized* in that** the non-polymeric transfer agent is chosen from the group comprising isopropyl alcohol, sodium hypophosphite and mercaptoethanol.

**3.** Polymer complex according to Claim 1, ***characterized* in that** the host polymer comprising vinylamine functions is derived from the hydrolysis of an N-vinylformamide homopolymer or copolymer.

**4.** Polymer complex according to Claim 1, ***characterized* in that** the host polymer comprising vinylamine functions is derived from the Hofmann degradation reaction on a "base polymer".

**5.** Polymer complex according to Claim 4, ***characterized* in that** the "base polymer" comprises at least one nonionic monomer chosen from the group comprising acrylamide and derivatives thereof.

**6.** Polymer complex according to Claim 4, ***characterized* in that** the "base polymer" comprises at least one polyfunctional compound containing at least 3 heteroatoms chosen from N, O, S,P, each bearing at least one labile hydrogen.

**7.** Polymer complex according to Claim 6, ***characterized* in that** the polyfunctional compound is chosen from the group comprising polyethyleneimine, polyamine and polyallylamine.

**8.** Polymer complex according to any one of Claims 1 to 7, ***characterized*** **in that** the constituent monomers of the host polymer and the water-soluble monomers are chosen from the group comprising:

- acrylamide; N-isopropylacrylamide; N,N-dimethylacrylamide; N-vinylformamide;
- quaternary ammonium salts of dimethylaminoethyl acrylate (DMAEA); quaternary ammonium salts of dimethylaminoethyl methacrylate (DMAEMA); dimethyldiallylammonium chloride (DADMAC); acrylamidopropyltrimethylammonium chloride (APTAC); methacrylamidopropyltrimethylammonium chloride (MAPTAC);
- acrylic acid; methacrylic acid; itaconic acid; crotonic acid; maleic acid; fumaric acid; 2-acrylamido-2-methylpropanesulfonic acid; vinylsulfonic acid; vinylphosphonic acid; allylsulfonic acid; allylphosphonic acid; styrenesulfonic acid; water-soluble alkali metal, alkaline-earth metal or ammonium salts of these monomers.

**9.** Polymer complex according to one of Claims 1 to 8, ***characterized*** **in that** the mass ratio between the host polymer and the monomers is advantageously between 0.01 and 4, preferably between 0.05 and 1 and even more preferably between 0.1 and 0.5.

**10.** Process for preparing the polymer complex that is the subject of one of Claims 1 to 9, comprising the following steps:

- preparation of a mixture comprising at least one host polymer, water-soluble monomers and at least one transfer agent;
- production of the polymer complex by polymerization of the water-soluble monomers.

**11.** Process for manufacturing paper, cardboard or the like, comprising the following steps:

- placing cellulose fibres in aqueous suspension;
- addition of mineral fillers to the aqueous suspension of fibres, the said fillers having been premixed with the polymer complex that is the subject of one of Claims 1 to 9;
- formation of a sheet of paper, cardboard or the like on the gauze of the paper machine;
- drying of the sheet.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 7001953 B
- US 8021516 B